# FASCICULE DE BREVET EUROPEEN

(11) **EP 2 335 796 B1**
(45) Date de publication et mention de la délivrance du brevet: **27.09.2017**
(21) Numéro de dépôt: 10306292.3
(22) Date de dépôt: 24.11.2010
(51) Int. Cl.: B01D 35/153, B01D 36/00, B01D 35/147

(54) **Dispositif de filtre à huile et véhicule comportant un tel dispositif**
Ölfiltervorrichtung und eine solche Vorrichtung umfassendes Fahrzeug
Oil filter device and vehicle equipped with said device

(30) Priorité: 25.11.2009 FR 0958365
(43) Date de publication de la demande: 22.06.2011
(73) Titulaire: Sogefi Air & Cooling (SAS), 78280 Guyancourt (FR)
(72) Inventeur: Lambert, Arnaud, 88520, RAVES (FR)
(74) Mandataire: Nuss, Laurent

(56) Documents cités:
- EP-A1- 1 094 203
- DE-A1- 10 132 200
- DE-A1-102007 040 666
- FR-A1- 2 828 909

## Description

La présente invention concerne le domaine des véhicules à moteur à combustion interne, plus particulièrement les carters d'huile des blocs moteurs de ces véhicules, et a pour objet un dispositif de filtre à huile et un véhicule comportant un tel dispositif.

Actuellement, les arrangements de filtres à huile se présentent généralement sous la forme d'un logement de réception du filtre formé dans le carter à huile lui-même ou dans une pièce rapportée fixée sur le carter et en communication fluidique avec ce dernier.

Ce logement est fermé par un capot ou un bouchon partiellement vissé dans le logement et nécessitant un outil pour son montage et son démontage, ainsi qu'un accès et un volume dégagés pour son utilisation.

Afin d'éviter un écoulement d'huile trop important lors du démontage du filtre, un bouchon de vidange partielle doit être prévu dans les réalisations connues, afin de permettre une évacuation d'une partie au moins de l'huile présente dans le logement et de la colonne d'huile présente dans le circuit alimentant ledit logement.

On connaît déjà, notamment par le document FR 2 828 909, des dispositifs de filtre à huile correspondant sensiblement au préambule de la revendication 1, et fournissant une solution permettant de s'affranchir du bouchon de vidange partielle.

Le document EP 1 094 203 A décrit un dispositif de filtration d'huile intégré dans un carter pour moteur à combustion interne.

Toutefois, ces dispositifs connus présentent également plusieurs inconvénients, en particulier un encombrement augmenté du carter et des opérations de montage et de démontage fastidieuses.

La présente invention a notamment pour but de pallier ces inconvénients.

Ce but est atteint par les dispositions de la partie caractérisante de la revendication 1.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
Les figures 1A et 1B sont des vues en perspective de dessus et de dessous d'un carter d'huile pourvu d'un dispositif de filtre à huile selon invention ;
Les figures 2A, 2B et 2C sont des vues de détail, en perspective et à une échelle différente, du dispositif de filtre à huile de la figure 1 respectivement en position fermée avec emboîtement maximal et obturation étanche (figure 2A), en position intermédiaire avec emboîtement partiel pour la vidange du logement de réception du filtre (figure 2B) et en position d'extraction complète du capot pour réaliser un changement de filtre ;
Les figures 3A, 3B et 3C sont des vues en coupe selon un plan contenant l'axe longitudinal du logement de réception du filtre, des objets respectivement représentés sur les figures 2A, 2B et 2C ;
La figure 4 est une vue partielle en perspective à une échelle différente de l'ensemble capot/filtre faisant partie du dispositif selon l'invention représenté sur les figures 2 et 3 ;
La figure 5 est une vue en perspective et en coupe, à une échelle différente, du logement de réception faisant partie du dispositif selon l'invention représenté sur les figures 2 et 3 ;
La figure 6 est une vue partielle, en perspective et de détail d'une partie de la paroi définissant le logement de réception du filtre vue depuis l'intérieur du carter et comportant un dispositif limiteur de pression, et,
La figure 7 est une vue partielle en coupe d'une partie du logement de réception du filtre illustrant le montage et la structure du dispositif limiteur de pression représenté également sur la figure 6.

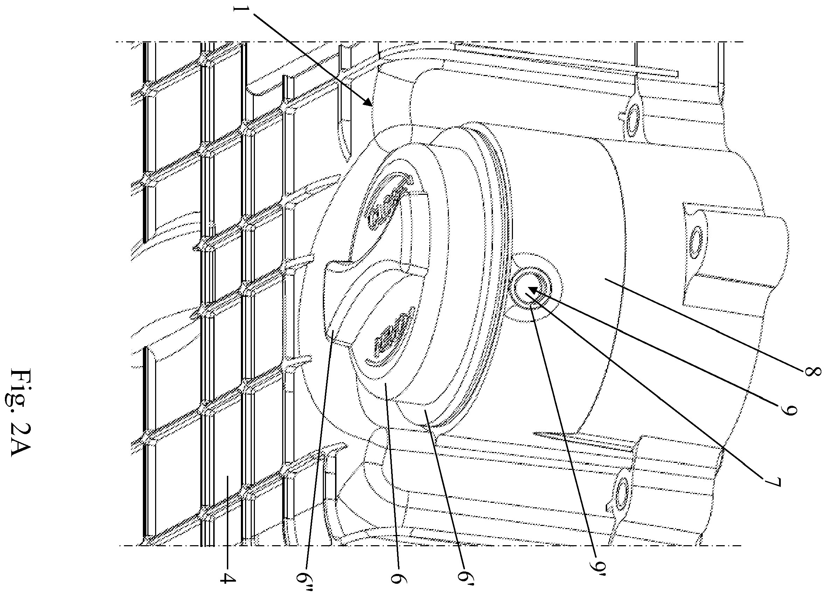

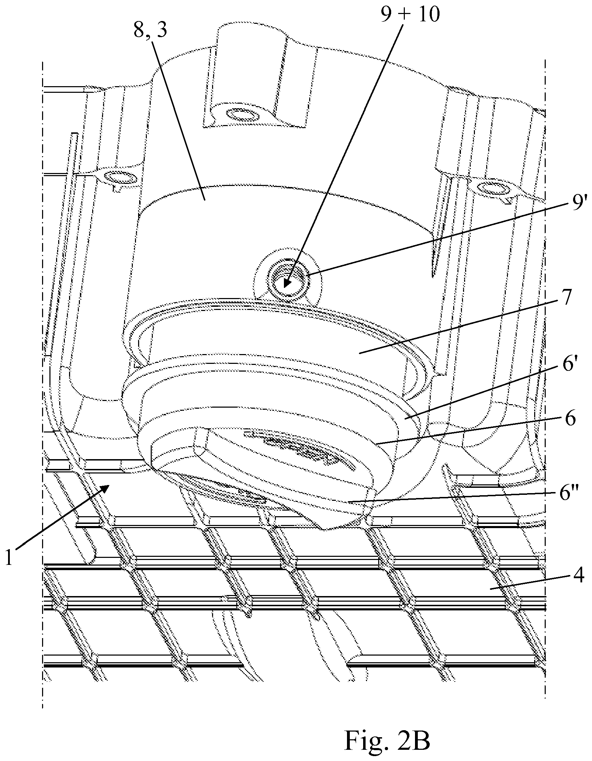

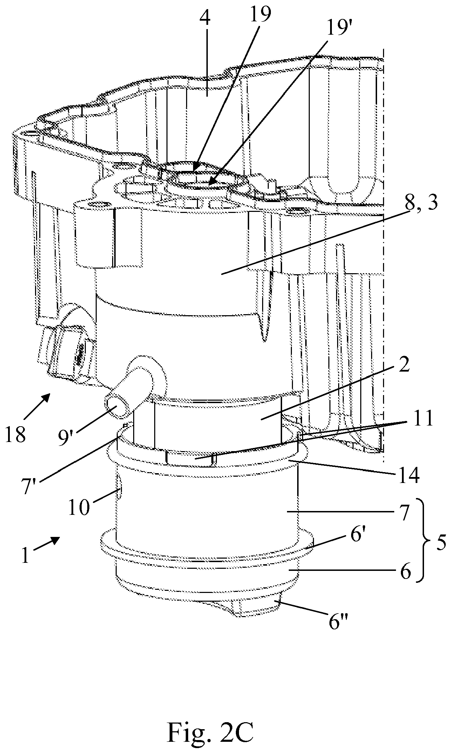

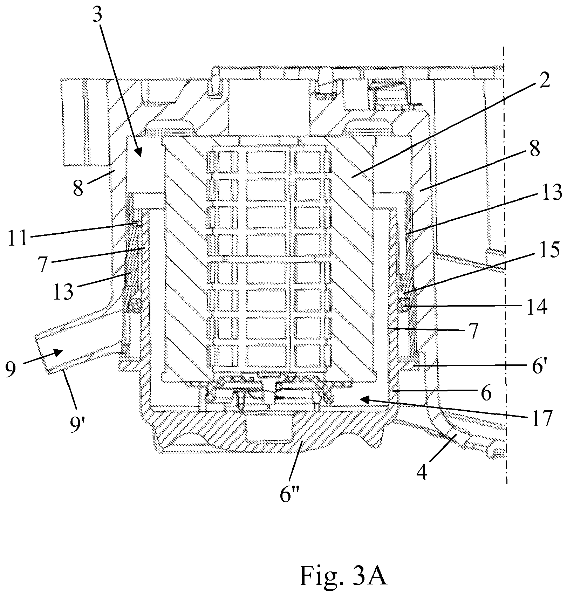

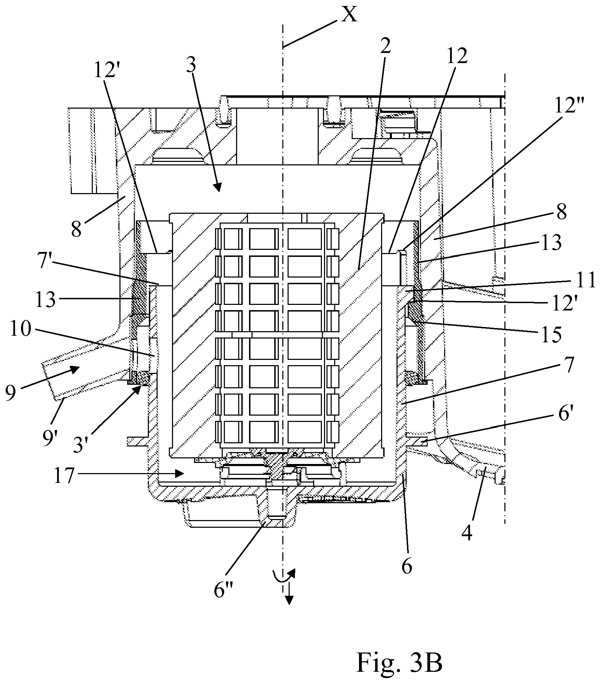

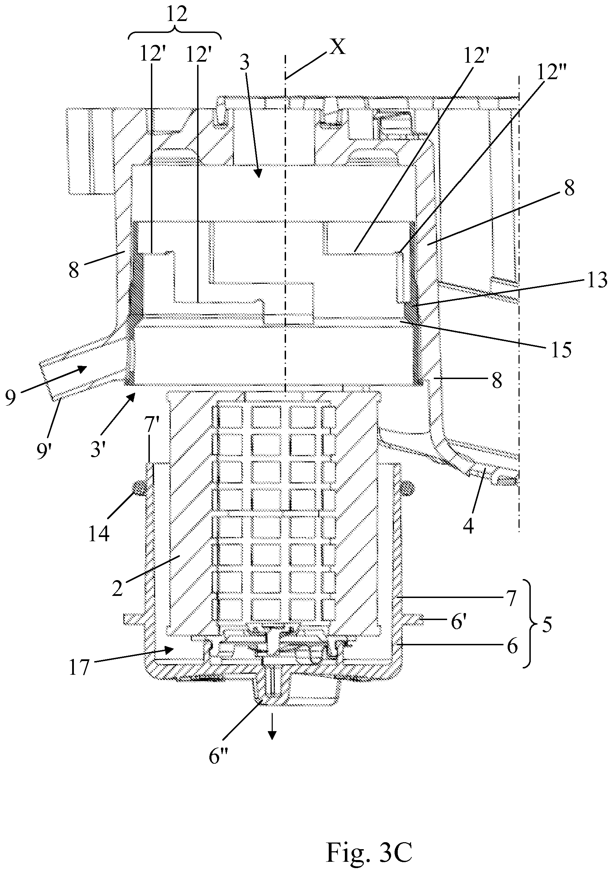

Les figures 2 et 3 notamment montrent un dispositif 1 de filtre à huile pour moteur à combustion interne, comprenant essentiellement un logement de réception 3 pour filtre à huile 2 formé dans le carter d'huile 4 du bloc-moteur ou dans une pièce rapportée sur ledit carter d'huile.

Ce logement de réception 3 présente une forme interne cylindrique circulaire avec un axe longitudinal X et est ouvert vers le bas, avec une orientation sensiblement verticale, ou fortement inclinée sur l'horizontale, lorsque le bloc moteur avec le dispositif de filtre 1 est en position montée dans un véhicule correspondant.

Conformément à l'invention, le dispositif 1 de filtre à huile comprend également un capot 5 en forme de cloche cylindrique, avec une partie formant bouchon 6 apte à obturer l'ouverture 3' du logement de réception 3 et une partie formant manchon cylindrique 5 apte à être emboîtée dans le logement de réception 3 avec faculté de rotation. De plus, la paroi 8 délimitant le logement de réception 3 présente une ouverture 9 débouchant sur le milieu extérieur et le manchon cylindrique 7 comporte une ouverture latérale 10. En outre, le manchon cylindrique 7 et la paroi 8 du logement de réception 3 comporte des moyens 11, 12 mutuellement coopérants par engagement mécanique et aptes à définir au moins deux positions emboîtées avec maintien, à des profondeurs différentes suivant l'axe de longitudinal X, du manchon cylindrique 7 dans le logement de réception 3, la position d'emboîtement la plus profonde correspondant à la position d'obturation étanche de l'ouverture 3' dudit logement 3 et l'autre ou l'une des autres position(s) d'emboîtement autorisant une mise en correspondance des ouvertures 9, 10 respectivement du manchon cylindrique 7 et de la paroi (8) du logement de réception 3.

La position d'emboîtement intermédiaire du capot 5 dans le logement 3 permet ainsi, après alignement des ouvertures 9 et 10, l'évacuation du volume d'huile situé au-dessus desdits ouvertures dans le logement 3 ainsi que l'huile se trouvant dans la portion de circuit alimentant ledit logement 3.

Comme le montrent également les figures des dessins annexés, le logement de réception 3 est, dans l'exemple représenté, partiellement intégré dans la structure du carter 4 et forme un volume cylindrique totalement ouvert à son extrémité inférieure et pourvu à son extrémité opposée supérieure d'une ouverture d'entrée à filtrer et d'une ouverture de sortie d'huile filtrée.

Le filtre 2 en lui-même présente, comme le montre à titre d'exemple les figures, une structure en forme de manchon.

L'huile à filtrer arrive autour de la périphérie extérieure du filtre 2, traverse sa paroi filtrante, puis est évacuée à travers le canal central du manchon formant le corps du filtre 2.

Bien entendu, le filtre 2 peut avoir une autre constitution et la circulation d'huile être réalisée d'une manière différente, par d'autres ouvertures de communication fluidique du logement de réception 3.

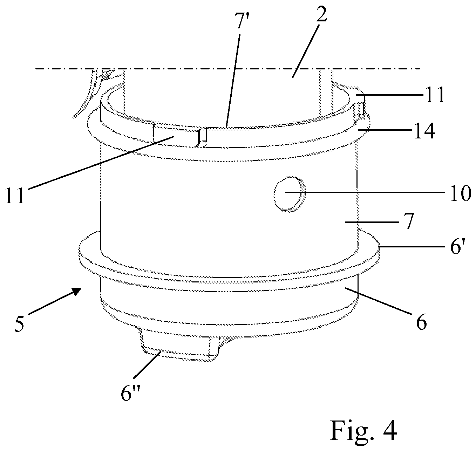

Conformément à une première caractéristique de l'invention ressortant des figures 2 à 5 des dessins annexés, les moyens mutuellement coopérants du manchon cylindrique 7 du capot 5 et de la paroi 8 du logement de réception 3 consistent respectivement en au moins deux, préférentiellement trois, formations saillantes 11, du type ergots, ailes, patins ou analogues, et en au moins deux, préférentiellement trois, chemins de circulation 12 pour ces formations saillantes 11, sous forme d'épaulements, de rainures ou de rebords par exemple, avec des segments mutuellement décalés suivant l'axe longitudinal X qui définissent lesdites profondeurs d'emboîtement différentes, le passage d'une position emboîtée à une autre s'effectuant par rotation du capot 5.

Les segments des chemins de circulation 12 définissant les différentes profondeurs d'emboîtement sont arrangés par groupe, les segments d'un même groupe étant disposés dans un plan perpendiculaire à l'axe longitudinal X.

Les formations saillantes 11 qui sont formées d'un seul tenant avec le manchon cylindrique 7 et qui viennent en appui sur ces segments afin de maintenir le capot dans une position emboîtée donnée dans le logement de réception 3 présentent une structure relativement massive et une section de cisaillement relativement importante afin d'aboutir à un montage suffisamment résistant du capot dans le logement.

La partie formant bouchon 6 comporte avantageusement une formation extérieure facilitant la rotation du capot 5 par action manuelle de l'utilisateur ou d'un opérateur, par exemple sous la forme d'une poignée 6" permettant une prise ergonomique et la génération d'un couple important autour de l'axe longitudinal X.

Egalement en accord avec l'invention et comme représenté sur les figures annexés, la face externe du manchon cylindrique 7 du capot 5 est pourvue de trois formations saillantes 11 sous forme d'ergots réparties régulièrement sur la circonférence extérieure et situées à proximité du bord libre 7' du manchon cylindrique 7 opposé à la partie formant bouchon, en ce que la face interne de la paroi 8 du logement de réception 3 est pourvue de trois chemins de circulation 12 comportant chacun deux marches d'escalier 12' correspondant à deux positions emboîtées avec maintien, à des profondeurs différentes, du capot 5 dans le logement 3, chacun desdits chemins 12 ne s'étendant que sur une fraction du pourtour interne dudit logement de réception 3 et chaque chemin 12 se terminant par une zone dégagée autorisant le passage d'un ergot 11 en vue de l'extraction du manchon cylindrique 7 du logement de réception 3, formant ainsi un montage à baïonnettes à deux étages.

On peut noter que chaque marche d'escalier 12' peut comporter au niveau de son arête un rebord 12" constituant un point dur, empêchant un passage involontaire des formations saillantes 11 positionnées sur les segments coplanaires de marches d'escalier 12' définissant une profondeur d'emboîtement donnée, vers les segments coplanaires des marches d'escalier 12' définissant une profondeur d'emboîtement moins profonde.

On peut également noter que, dans la position d'emboîtement intermédiaire (figures 2B et 3B), la rotation du capot 5 permet de contrôler l'écoulement de l'huile à travers les ouvertures 9 et 10, par le contrôle du positionnement relatif de ces deux ouvertures l'une par rapport à l'autre.

En fonction du mode de fabrication et du matériau constituant le carter 4 et la paroi 8 du logement de réception 3, les chemins de circulation 12 peuvent être obtenus par différents modes de réalisation.

Ainsi, les chemins de circulation 12 peuvent être formés directement dans la paroi 8 du logement de réception 3, au niveau de sa face interne.

En variante, il peut également être prévu que les chemins de circulation 12 sont formés dans un matériau rapporté par surmoulage sur la face interne de la paroi 8 du logement de réception 3.

Enfin, selon une troisième variante ressortant des figures annexées, les chemins de circulation 12 peuvent être ménagés dans une pièce rapportée 13 sous forme de manchon cylindrique monté de manière ajustée, et éventuellement solidarisée par collage ou analogue, dans le logement de réception 3.

Afin d'empêcher toute fuite d'huile lorsque le capot 5 est en position fermée d'obturation, il est bien entendu nécessaire de prévoir des moyens d'étanchéification adaptés, notamment entre ledit capot et la paroi 8 du logement de réception 3.

Ainsi, le dispositif de filtre à huile 1 comprend au moins un joint d'étanchéité 14, par exemple torique, monté sur la face externe du manchon cylindrique 7 du capot 5, ledit joint 14 venant en appui contre un rebord interne 15 formant siège circulaire de la paroi 8 du logement de réception 3 en position emboîtée maximale et d'obturation étanche dudit capot 5 et ledit joint 14 étant positionné entre la partie formant bouchon 6 et l'ouverture latérale 10 du manchon cylindrique 7, en venant en appui contre la paroi 8 du logement de réception 3 sous l'ouverture 9.

En accord avec une autre variante, non illustrée aux figures annexées, il peut également être prévu que le dispositif de filtre à huile 1 comprenne au moins deux joints d'étanchéité, par exemple toriques, montés sur la face externe du manchon cylindrique 7 du capot 5, dont l'un est positionné à proximité du bord libre 7' dudit manchon 7 opposé à la partie formant bouchon 6, préférentiellement immédiatement sous les moyens saillants 11 en forme d'ergots ou de patins, et dont l'autre est positionné entre ladite partie formant bouchon 6 et l'ouverture latérale 10 du manchon cylindrique 7.

Avantageusement, la partie 6 formant bouchon du capot 5 est pourvu d'un rebord ou d'une aile annulaire circonférentielle 6' destiné(e) à venir en appui contre le bord de l'ouverture inférieure 3' du logement de réception 3 en position emboîtée d'obturation étanche dudit capot 5, un joint d'étanchéité étant éventuellement présent sur ledit bord ou sur ledit rebord ou aile 6'.

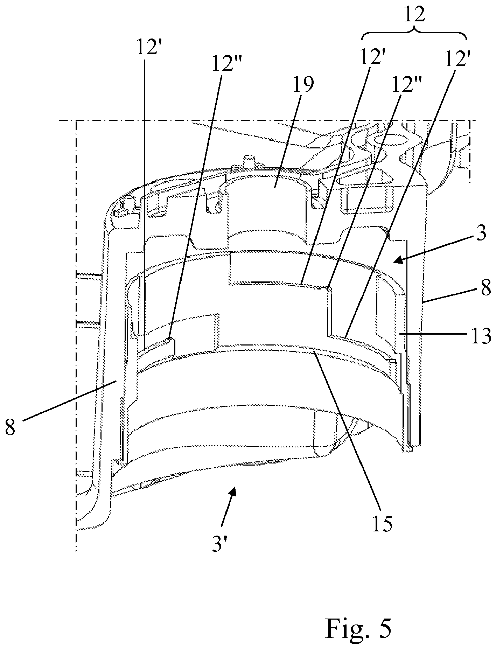

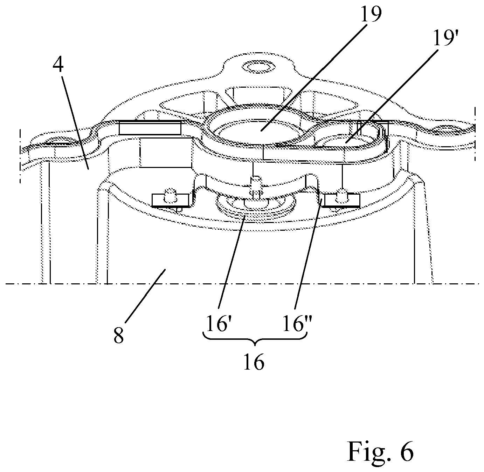

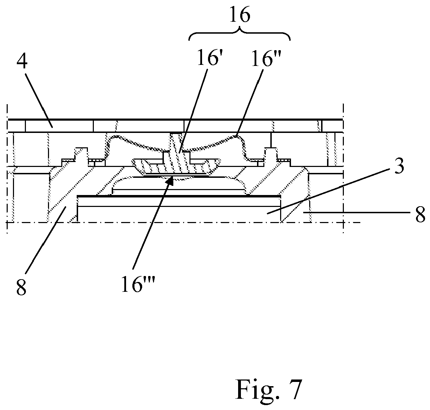

Comme le montrent les figures 5, 6 et 7 des dessins annexés et en vue d'éviter une surpression susceptible d'entraîner un éclatement du dispositif de filtre à air, en particulier par arrachement des formations saillantes 11, le logement de réception 3 est pourvu selon l'invention d'un moyen limiteur de pression 16, autorisant une évacuation des gaz vers le volume intérieur du carter 4 en cas de dépassement d'une pression limite supérieure dans ledit logement de réception 3.

En accord avec un mode de réalisation pratique préféré, le moyen limiteur de pression 16 consiste en un arrangement [clapet 16'/ressort 16"] obturant par sollicitation élastique un orifice 16"' de communication entre les volumes intérieurs du logement de réception 3 et du carter 4, ledit orifice 16'" débouchant dans le volume intérieur du carter au niveau d'une zone qui n'est pas en contact avec l'huile résidant dans ledit carter 4.

Conformément à des caractéristiques supplémentaires de l'invention, l'ouverture 9 de la paroi 8 du logement de réception 3 débouchant sur le milieu extérieur est située à proximité de l'ouverture inférieure 3' dudit logement de réception 3 et est prolongée par une tubulure d'écoulement 9' et la partie formant bouchon 6 du capot 5 comporte des formations saillantes et/ou en creux 17 définissant un circuit de dérivation pour la circulation de l'huile en cas de bouchage du filtre 2.

De manière préférée, le capot 5 et la pièce rapportée ou le carter 4 muni(e) du logement de réception 3 sont réalisés en un matériau thermoplastique, éventuellement chargé ou renforcé, par exemple du polyamide 66.

Ainsi, grâce à l'invention, il est possible de proposer un dispositif de filtre à huile présentant les avantages suivants :
- l'obtention d'un encombrement réduit (intégration du dispositif de filtre à huile dans la structure du carter),
- la possibilité d'un montage et d'un démontage du filtre à huile par un mouvement de rotation sur une fraction de tour,
- la fourniture d'un logement de filtre à huile formant une enceinte close avec une sécurité contre la surpression, et
- la possibilité d'un montage et d'un démontage aisé et sans outil manuel du capot et du bouchon.

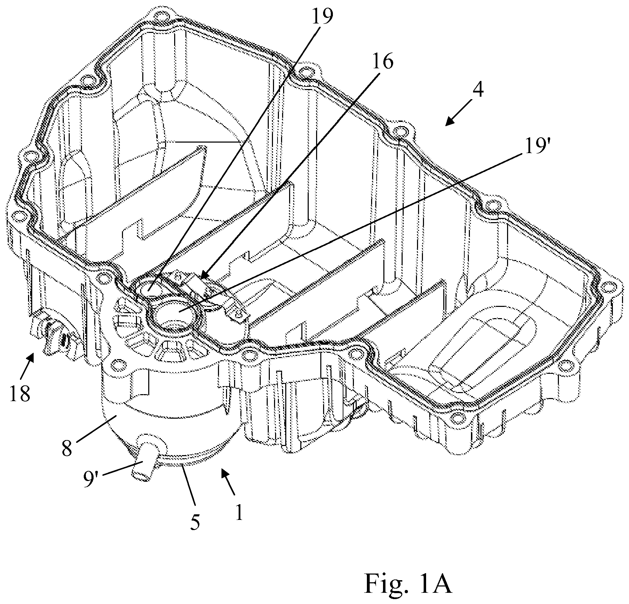

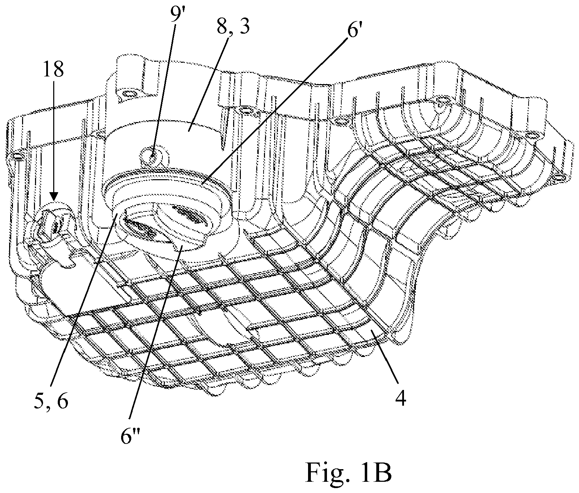

L'invention a également pour objet un véhicule automobile à moteur à combustion interne, dont le bloc moteur comporte un carter à huile intégrant un logement de réception pour filtre à huile, véhicule caractérisé en ce que ledit carter 4 comporte un dispositif de filtre à huile 1 tel que décrit précédemment (figures 1A et 1B).

Ledit carter à huile 4 est avantageusement entièrement réalisé en un matériau thermoplastique et comporte des nervures et ailettes de rigidification structurelle internes et externes.

Le carter 4 est également équipé d'une ouverture de vidange 18 ménagée au niveau de l'emplacement le plus bas dudit carter et normalement obturée par un bouchon.

Comme le montrent les figures 1A et 1B, le logement de réception 3 peut être formé sur la périphérie du carter 4 et intégré dans la structure de ce dernier, en s'étendant au moins partiellement, préférentiellement majoritairement, dans le volume intérieur dudit carter 4. Par exemple, seul le bouchon 6 ou une portion extérieure dudit bouchon 6 peut éventuellement être protubérante par rapport à la paroi extérieure du carter.

Ce logement de réception 3 comporte une ouverture d'amenée ou d'entrée 19 pour l'huile à filtrer et une ouverture 19' de sortie ou d'évacuation de l'huile filtrée.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Dispositif de filtre à huile pour moteur à combustion interne, comprenant un logement de réception (3) pour filtre à huile (2) présentant une forme interne cylindrique circulaire avec un axe longitudinal (X) et étant ouvert vers le bas, avec une orientation sensiblement verticale, ou fortement inclinée sur l'horizontale, lorsque le bloc moteur avec le dispositif de filtre (1) est en position montée dans un véhicule correspondant,
ce dispositif (1) comprenant également un capot (5) en forme de cloche cylindrique, avec une partie formant bouchon (6) apte à obturer l'ouverture (3') du logement de réception (3) et une partie formant manchon cylindrique (7) apte à être emboîtée dans le logement de réception (3) avec faculté de rotation,
dispositif (1) dans lequel la paroi (8) délimitant le logement de réception (3) présente une ouverture (9) débouchant sur le milieu extérieur et le manchon cylindrique (7) comporte une ouverture latérale (10), et dans lequel le manchon cylindrique (7) et la paroi (8) du logement de réception (3) comporte des moyens (11, 12) mutuellement coopérants par engagement mécanique et aptes à définir au moins deux positions emboîtées avec maintien, à des profondeurs différentes suivant l'axe longitudinal (X), du manchon cylindrique (7) dans le logement de réception (3), la position d'emboîtement la plus profonde correspondant à la position d'obturation étanche de l'ouverture (3') dudit logement (3) et l'autre ou l'une des autres position(s) d'emboîtement autorisant une mise en correspondance des ouvertures (9, 10) respectivement du manchon cylindrique (7) et de la paroi (8) du logement de réception (3).
dispositif de filtre à huile (1) **caractérisé**
**en ce que** le logement de réception (3) pour filtre à huile est intégré dans un carter à huile pour moteur à combustion interne,
**en ce que** les moyens mutuellement coopérants du manchon cylindrique (7) du capot (5) et de la paroi (8) du logement de réception (3) consistent respectivement en au moins deux, préférentiellement trois, formations saillantes (11), du type ergots, ailes, patins ou analogues, et en au moins deux, préférentiellement trois, chemins de circulation (12) pour ces formations saillantes (11), sous forme d'épaulements, de rainures ou de rebords par exemple, avec des segments mutuellement décalés suivant l'axe longitudinal (X) qui définissent lesdites profondeurs d'emboîtement différentes, le passage d'une position emboîtée à une autre s'effectuant par rotation du capot (5), et,
**en ce que** le logement de réception (3) est pourvu d'un moyen limiteur de pression (16), autorisant une évacuation des gaz vers le volume intérieur du carter (4) en cas de dépassement d'une pression limite supérieure dans ledit logement de réception (3).

2. Dispositif de filtre selon la revendication 1, **caractérisé en ce que** la face externe du manchon cylindrique (7) du capot (5) est pourvue de trois formations saillantes (11) sous forme d'ergots réparties régulièrement sur la circonférence extérieure et situées à proximité du bord libre (7') du manchon cylindrique (7) opposé à la partie formant bouchon, **en ce que** la face interne de la paroi (8) du logement de réception (3) est pourvue de trois chemins de circulation (12) comportant chacun deux marches d'escalier (12') correspondant à deux positions emboîtées avec maintien, à des profondeurs différentes, du capot (5) dans le logement (3), chacun desdits chemins (12) ne s'étendant que sur une fraction du pourtour interne dudit logement de réception (3) et chaque chemin (12) se terminant par une zone dégagée autorisant le passage d'un ergot (11) en vue de l'extraction du manchon cylindrique (7) du logement de réception (3), formant ainsi un montage à baïonnettes à deux étages.

3. Dispositif de filtre à huile selon l'une quelconque des revendications 1 et 2, **caractérisé en ce que** les chemins de circulation (12) sont formés directement dans la paroi (8) du logement de réception (3), au niveau de sa face interne.

4. Dispositif de filtre à huile selon l'une quelconque des revendications 1 et 2, **caractérisé en ce que** les chemins de circulation (12) sont formés dans un matériau rapporté par surmoulage sur la face interne de la paroi (8) du logement de réception (3).

5. Dispositif de filtre à huile selon l'une quelconque des revendications 1 et 2, **caractérisé en ce que** les chemins de circulation (12) sont ménagés dans une pièce rapportée (13) sous forme de manchon cylindrique monté de manière ajustée, et éventuellement solidarisée par collage ou analogue, dans le logement de réception (3).

6. Dispositif de filtre à huile selon l'une quelconque des revendications 1 à 5, **caractérisé en ce qu'**il comprend au moins un joint d'étanchéité (14), par exemple torique, monté sur la face externe du manchon cylindrique (7) du capot (5), ledit joint (14) venant en appui contre un rebord interne (15) formant siège circulaire de la paroi (8) du logement de réception (3) en position emboîtée maximale et d'obturation étanche dudit capot (5) et ledit joint (14) étant positionné entre la partie formant bouchon (6) et l'ouverture latérale (10) du manchon cylindrique (7), en venant en appui contre la paroi (8) du logement de réception (3) sous l'ouverture (9).

7. Dispositif de filtre à huile selon l'une quelconque des revendications 1 à 5, **caractérisé en ce qu'**il comprend au moins deux joints d'étanchéité, par exemple toriques, montés sur la face externe du manchon cylindrique (7) du capot (5), dont l'un est positionné à proximité du bord libre (7') dudit manchon (7) opposé à la partie formant bouchon (6), préférentiellement immédiatement sous les moyens saillants (11) en forme d'ergots ou de patins, et dont l'autre est positionné entre ladite partie formant bouchon (6) et l'ouverture latérale (10) du manchon cylindrique (7).

8. Dispositif de filtre à huile selon l'une quelconque des revendications 1 à 7, **caractérisé en ce que** la partie (6) formant bouchon du capot (5) est pourvu d'un rebord ou d'une aile annulaire circonférentielle (6') destiné(e) à venir en appui contre le bord de l'ouverture inférieure (3') du logement de réception (3) en position emboîtée d'obturation étanche dudit capot (5), un joint d'étanchéité étant éventuellement présent sur ledit bord ou sur ledit rebord ou aile (6').

9. Dispositif de filtre à huile selon la revendication 1, **caractérisé en ce que** le moyen limiteur de pression (16) consiste en un arrangement [clapet (16')/ressort (16")] obturant par sollicitation élastique un orifice (16"') de communication entre les volumes intérieurs du logement de réception (3) et du carter (4) et **en ce que** l'orifice (16"') débouche dans le volume intérieur du carter au niveau d'une zone qui n'est pas en contact avec l'huile résidant dans ledit carter (4).

10. Dispositif de filtre à huile selon l'une quelconque des revendications 1 à 9, **caractérisé en ce que** l'ouverture (9) de la paroi (8) du logement de réception (3) débouchant sur le milieu extérieur est située à proximité de l'ouverture inférieure (3') dudit logement de réception (3) et est prolongée par une tubulure d'écoulement (9') et **en ce que** la partie formant bouchon (6) du capot (5) comporte des formations saillantes et/ou en creux (17) définissant un circuit de dérivation pour la circulation de l'huile en cas de bouchage du filtre (2).

11. Dispositif de filtre selon l'une quelconque des revendications 1 à 10, **caractérisé en ce que** le capot (5) et la pièce rapportée ou le carter (4) muni(e) du logement de réception (3) sont réalisés en un matériau thermoplastique, éventuellement chargé ou renforcé, par exemple du polyamide 66.

12. Véhicule automobile à moteur à combustion interne, dont le bloc moteur comporte un carter à huile intégrant un logement de réception pour filtre à huile, véhicule **caractérisé en ce que** ledit carter (4) comporte un dispositif de filtre à huile (1) selon l'une quelconque des revendications 1 à 11.

13. Véhicule automobile selon la revendication 12, **caractérisé en ce que** le carter à huile (4) est entièrement réalisé en un matériau thermoplastique.

## Patentansprüche

1. Ölfiltervorrichtung für einen Verbrennungsmotor, umfassend einen Aufnahmeraum (3) für das Ölfilter (2) mit einer inneren Kreiszylinderform mit einer Längsachse (X) und offen zur Basis, mit einer im Wesentlichen vertikalen Orientierung, oder stark horizontal geneigt, wenn sich der Motorblock mit der Filtervorrichtung (1) in montierter Position in einem entsprechenden Fahrzeug befindet,
wobei diese Vorrichtung (1) auch eine Abdeckung (5) mit einer Zylinderglockenform aufweist, und wobei ein Abschnitt der Abdeckung eine Kappe (6) bildet, die geeignet ist, die Öffnung (3') des Aufnahmeraums (3) zu verschließen, und wobei ein Abschnitt der Abdeckung eine Zylindermanschette (7) bildet, die geeignet ist, in dem Aufnahmeraum (3) mit der Möglichkeit einer Rotation eingepasst zu werden,
und wobei die Wand (8), die den Aufnahmeraum (3) begrenzt, eine Öffnung (9) aufweist, die zum äußeren Medium mündet, und die Zylindermanschette (7) eine seitliche Öffnung (10) umfasst, und wobei die Zylindermanschette (7) und die Wand (8) des Aufnahmeraums (3) Mittel (11, 12) umfassen, die miteinander durch mechanischen Eingriff zusammenwirken und geeignet sind, mindestens zwei Eingriffspositionen mit einem Halt in unterschiedlichen Tiefen entlang der Längsachse (X) der Zylindermanschette (7) in dem Aufnahmeraum (3) zu definieren, wobei die tiefste Eingriffsposition der dichten Verschlussposition der Öffnung (3') des Raums (3) entspricht, und die andere oder die anderen Eingriffpositionen eine entsprechende Anordnung der Öffnungen (9, 10) jeweils der Zylindermanschette (7) und der Wand (8) des Aufnahmeraums (3) gestattet,
**dadurch gekennzeichnet,**
**dass** der Aufnahmeraum (3) für das Ölfilter in einem Ölgehäuse für den Verbrennungsmotor integriert ist,
**dass** die miteinander zusammenwirkenden Mittel der Zylindermanschette (7) der Abdeckung (5) und der Wand (8) des Aufnahmeraums (3) jeweils bestehen aus mindestens zwei, bevorzugt drei, vorspringenden Formationen (11) vom Typ einer Nase, eines Flügels, eines Schuhs oder Analogons, und aus mindestens zwei, bevorzugt drei, Zirkulationswegen (12) für diese vorspringenden Formationen (11), beispielsweise in der Form von Schultern, Rillen oder Flanschen, mit voneinander versetzten Segmenten gemäß der Längsachse (X), welche die unterschiedlichen Eingriffstiefen definieren, wobei der Übergang von einer Eingriffsposition in eine andere durch eine Drehung der Abdeckung (5) erfolgt, und
**dass** der Aufnahmeraum (3) mit einem Druckbegrenzungsmittel (16) versehen ist, das eine Evakuierung von Gas zu dem Innenvolumen des Gehäuses (4) im Fall des Überschreitens einer oberen Druckgrenze in dem Aufnahmeraum (3) gestattet.

2. Filtervorrichtung nach Anspruch 1, **dadurch gekennzeichnet, dass** die Außenfläche der Zylindermanschette (7) der Abdeckung (5) mit drei vorspringenden Formationen (11) in der Form von Nasen versehen ist, die regelmäßig über den Außenumfang verteilt und in der Nähe des freien Rands (7') der Zylindermanschette (7) gegenüber dem die Kappe bildenden Teil angeordnet ist, und dadurch, dass die Innenfläche der Wand (8) des Aufnahmeraums (3) mit drei Zirkulationswegen (12) versehen ist, welche jeweils zwei Treppenstufen (12`) umfassen, die zwei Eingriffspositionen mit einem Halt, in unterschiedlichen Tiefen, der Abdeckung (5) in dem Raum (3) entsprechen, wobei sich jeder der Wege (12) nur über einen Teil des Innenumfangs des Aufnahmeraums (3) erstreckt, und jeder Weg (12) durch eine freiliegende Zone endet, die den Durchgang einer Nase (11) zum Herausziehen der Zylindermanschette (7) aus dem Aufnahmeraum (3) gestattet, wobei so eine Bajonettmontage in zwei Stufen gebildet wird.

3. Ölfiltervorrichtung nach einem der Ansprüche 1 und 2, **dadurch gekennzeichnet, dass** die Zirkulationswege (12) direkt in der Wand (8) des Aufnahmeraums (3) auf der Höhe seiner Innenfläche gebildet sind.

4. Ölfiltervorrichtung nach einem der Ansprüche 1 und 2, **dadurch gekennzeichnet, dass** die Zirkulationswege (12) aus einem Material gebildet sind, das durch Aufformen auf die Innenfläche der Wand (8) des Aufnahmeraums (3) gesetzt ist.

5. Ölfiltervorrichtung nach einem der Ansprüche 1 und 2, **dadurch gekennzeichnet, dass** die Zirkulationswege (12) in einem Einsatz (13) in der Form einer Zylindermanschette aufgenommen sind, die passend, und gegebenenfalls fest verbunden durch Kleben oder ein Analogon, in dem Aufnahmeraum (3) montiert ist.

6. Ölfiltervorrichtung nach einem der Ansprüche 1 bis 5, **dadurch gekennzeichnet, dass** diese mindestens einen, beispielsweise torischen, Dichtungsring (14) umfasst, der an der Außenfläche der Zylindermanschette (7) der Abdeckung (5) montiert ist, wobei der Ring (14) gegen einen inneren Flansch (15) anliegt, der einen kreisförmigen Sitz der Wand (8) des Aufnahmeraums (3) in der maximalen Eingriffs- und dichten Verschlussposition der Abdeckung (5) bildet, und wobei der Ring (14) zwischen dem die Kappe bildenden Abschnitt (6) und der seitlichen Öffnung (10) der Zylindermanschette (7) positioniert ist, indem er gegen die Wand (8) des Aufnahmeraums (3) unter der Öffnung (9) anliegt.

7. Ölfiltervorrichtung nach einem der Ansprüche 1 bis 5, **dadurch gekennzeichnet, dass** diese mindestens zwei, beispielsweise torische, Dichtungsringe umfasst, die an der Außenfläche der Zylindermanschette (7) der Abdeckung (5) montiert sind, wobei der eine davon in der Nähe des freien Rands (7') der Manschette (7) gegenüber dem die Kappe bildenden Abschnitt (6), bevorzugt unmittelbar unter den vorspringenden Mitteln (11) in der Form von Nasen oder Schuhen positioniert ist, und wobei der andere davon zwischen dem die Kappe bildenden Abschnitt (6) und der seitlichen Öffnung (10) der Zylindermanschette (7) positioniert ist.

8. Ölfiltervorrichtung nach einem der Ansprüche 1 bis 7, **dadurch gekennzeichnet, dass** der die Nase bildende Abschnitt (6) der Abdeckung (5) mit einem Flansch oder einem ringförmigen Umfangsflügel (6') versehen ist, der dazu bestimmt ist, gegen den Rand der unteren Öffnung (3') des Aufnahmeraums (3) in der Eingriffsposition des dichten Verschlusses der Abdeckung (5) anzuliegen, wobei gegebenenfalls ein Dichtungsring an dem Rand oder an dem Flansch oder Flügel (6`) vorliegt.

9. Ölfiltervorrichtung nach Anspruch 1, **dadurch gekennzeichnet, dass** das Druckbegrenzungsmittel (16) aus einer Anordnung [Ventil (16')/Feder (16")] besteht, die durch elastische Vorspannung eine Kommunikationsöffnung (16"') zwischen den Innenvolumen des Aufnahmeraums (3) und des Gehäuses (4) verschließt, und dass die Öffnung (16"') in das Innenvolumen des Gehäuses auf der Höhe der Zone mündet, die nicht mit dem in dem Gehäuse (4) befindlichen Öl in Kontakt steht.

10. Ölfiltervorrichtung nach einem der Ansprüche 1 bis 9, **dadurch gekennzeichnet, dass** die Öffnung (9) der Wand (8) des Aufnahmeraums (3), die zu dem äußeren Medium mündet, in der Nähe der unteren Öffnung (3') des Aufnahmeraums (3) angeordnet und durch einen rohrförmigen Abfluss (9') verlängert ist, und dadurch, dass der die Nase bildende Abschnitt (6) der Abdeckung (5) vorspringende oder hohle Formationen (17) umfasst, die einen Ableitungskreislauf für die Ölzirkulation im Fall der Verstopfung des Filters (2) definieren.

11. Ölfiltervorrichtung nach einem der Ansprüche 1 bis 10, **dadurch gekennzeichnet, dass** die Abdeckung (5) und der Einsatz oder das Gehäuse (4), die mit dem Aufnahmeraum (3) versehen sind, aus einem thermoplastischen Material, gegebenenfalls gefüllt oder verstärkt, beispielsweise aus Polyamid 66, hergestellt sind.

12. Automobilfahrzeug mit einem Verbrennungsmotor, dessen Motorblock ein Ölgehäuse umfasst, in das ein Aufnahmeraum für ein Ölfilter integriert ist, **dadurch gekennzeichnet, dass** das Gehäuse (4) eine Ölfiltervorrichtung (1) nach einem der Ansprüche 1 bis 11 umfasst.

13. Automobilfahrzeug nach Anspruch 12, **dadurch gekennzeichnet, dass** das Ölgehäuse (4) zur Gänze aus einem thermoplastischen Material hergestellt ist.

## Claims

1. Oil filter device for an internal combustion engine, comprising a receiving chamber (3) for the oil filter (2) having a circular cylindrical internal form with a longitudinal axis (X) and being open towards the bottom, with a substantially vertical orientation, or inclined considerably relative to the horizontal, when the engine block with the filter device (1) is mounted in position in a corresponding vehicle,
said device (1) also comprising a cover (5) in the form of a cylindrical dome, with a part forming a plug (6) which is able to block the opening (3') of the receiving chamber (3) and a part forming a cylindrical sleeve (7) which able to be housed in the receiving chamber (3) with the ability to rotate,
the device (1) in which the wall (8) delimiting the receiving chamber (3) has an opening (9) leading to the external environment and the cylindrical sleeve (7) comprises a lateral opening (10), and in which the cylindrical sleeve (7) and the wall (8) of the receiving chamber (3) comprise means (11, 12) which cooperate mutually by mechanical engagement and are able to define at least two nested positions with support at different depths according to the longitudinal axis (X) of the cylindrical sleeve (7) in the receiving chamber (3), the deepest nested position corresponding to the tight sealed position of the opening (3') of said chamber (3) and the other or one of the other nested position(s) enabling the matching of the openings (9, 10) of the cylindrical sleeve (7) and of the wall (8) of the receiving chamber (3) respectively,
the oil filter device (1) being **characterised**
**in that** the receiving chamber (3) for the oil filter is integrated into an oil sump for an internal combustion engine,
**in that** the mutually cooperating means of the cylindrical sleeve (7) of the cover (5) and the wall (8) of the receiving chamber (3) consist respectively of at least two, preferably three, projections (11), such as lugs, vanes, skids or the like, and at least two, preferably three, flow paths (12) for said projections (11), in the form of shoulders, grooves or edges by for example, with mutually offset segments according to the longitudinal axis (X) which define said different nesting depths, the passage from one nested position to another being performed by rotating the cover (5), and
**in that** the receiving chamber (3) is provided with a pressure limiting unit (16) enabling the evacuation of gases towards the interior volume of the sump (4) if an upper limit pressure has been exceeded in said receiving chamber (3).

2. Filter device according to claim 1, **characterised in that** the outer face of the cylindrical sleeve (7) of the cover (5) is provided with three projections (11) in the form of lugs distributed evenly around the outer circumference and located close to the free edge (7') of the cylindrical sleeve (7) opposite the part forming a plug, **in that** the internal face of the wall (8) of the receiving chamber (3) is provided with three circulation paths (12) each comprising two steps (12') corresponding to two nested positions which support at different depths the cover (5) in the chamber (3), each of said paths (12) only extending over a fraction of the internal perimeter of said receiving chamber (3) and each path (12) ending with a released zone enabling the passage of a lug (11) for the extraction of the cylindrical sleeve (7) from the receiving chamber (3), thus forming a bayonet assembly in two stages.

3. Oil filter device according to any of claims 1 and 2, **characterised in that** the circulation paths (12) are formed directly in the wall (8) of the receiving chamber (3) on its internal face.

4. Oil filter device according to any of claims 1 and 2, **characterised in that** the circulation paths (12) are formed in a material attached by overmoulding onto the internal face of the wall (8) of the receiving chamber (3).

5. Oil filter device according to any of claims 1 and 2, **characterised in that** the circulation paths (12) are arranged in an attached part (13) in the form of a cylindrical sleeve mounted in an adjusted manner and possible joined by adhesion or the like into the receiving chamber (3).

6. Oil filter device according to any of claims 1 to 5, **characterised in that** it comprises at least one seal (14), for example a O-ring, mounted on the outer face of the cylindrical sleeve (7) of the cover (5), said seal (14) bearing against an internal edge (15) forming a circular seat of the wall (8) of the receiving chamber (3) in a maximum nested position and with the sealing of said cover (5), and said seal (14) being positioned between the part forming a plug (6) and the lateral opening (10) of the cylindrical sleeve (7) by bearing against the wall (8) of the receiving chamber (3) below the opening (9).

7. Oil filter device according to any of claims 1 to 5, **characterised in that** it comprises at least two seals, for example O-rings, mounted on the external face of the cylindrical sleeve (7) of the cover (5), one of which is positioned close to the free edge (7') of said sleeve (7) opposite the part forming a plug (6), preferably immediately below the projecting means (11) in the form of lugs or skids, and the other of which is positioned between said part forming the plug (6) and the lateral opening (10) of the cylindrical sleeve (7).

8. Oil filter device according to any of claims 1 to 7, **characterised in that** the part (6) forming the plug of the cover (5) is provided with an edge or a circumferential annular vane (6') designed to bear against the edge of the lower opening (3') of the receiving chamber (3) in a nested tight sealing position of said cover (5), a seal being possibly provided on said edge or on said side or vane (6').

9. Oil filter device according to claim 1, **characterised in that** the pressure limiter (16) consists of an[valve (16')/spring (16")] arrangement which seals by resilient biasing a communication opening (16"') between the interior chambers of the receiving chamber (3) and sump (4) and **in that** the opening (16"') leads into the interior chamber of the sump in an area which is not in contact with the oil residing in said sump (4).

10. Oil filter device according to any of claims 1 to 9, **characterised in that** the opening (9) of the wall (8) of the receiving chamber (3) opening to the external environment is located in the proximity of the lower opening (3') of said receiving chamber (3) and is extended by a flow pipe (9') and **in that** the part forming the plug (6) of the cover (5) comprises projections and/or cavities (17) defining a branch circuit for the circulation of oil in case the filter (2) gets blocked.

11. Filter device according to any of claims 1 to 10, **characterised in that** the cover (5) and the attached part or the sump (4) provided with the receiving chamber (3) are made from a thermoplastic material, which is possibly charged or reinforced, for example with polyamide 66.

12. Automobile vehicle with an internal combustion engine, the engine block of which comprises an oil sump integrating a receiving chamber for the oil filter, said vehicle being **characterised in that** said sump (4) comprises an oil filter device (1) according to any of claims 1 to 11.

13. Automobile vehicle according to claim 12, **characterised in that** the oil sump (4) is made entirely from a thermoplastic material.
